# EUROPÄISCHE PATENTSCHRIFT

(11) **EP 1 426 708 B1**
(45) Veröffentlichungstag und Bekanntmachung des Hinweises auf die Patenterteilung: **09.02.2011**
(21) Anmeldenummer: 03016562.5
(22) Anmeldetag: 24.07.2003
(51) Int. Cl.: F24H 8/00, F24H 9/00, F24H 1/43

(54) **Heizgerät mit einem Verdrängungskörper im Heizgasweg**
Heating device with a positive displacement device in the heating gas path
Dispositif de chauffage avec un dispositif à déplacement positif dans le passage de gaz de chauffage

(30) Priorität: 06.12.2002 DE 10257028
(43) Veröffentlichungstag der Anmeldung: 09.06.2004
(73) Patentinhaber: ROBERT BOSCH GMBH, 70442 Stuttgart (DE)
(72) Erfinder: Hosch, Manfred, 73669 Lichtenwald (DE)

(56) Entgegenhaltungen:
- EP-A- 1 251 319
- EP-A- 1 278 025
- DE-A- 2 550 410
- FR-A- 2 514 475
- GB-A- 2 094 968

## Beschreibung

Die Erfindung geht aus von einem Heizgerät nach dem Oberbegriff des Anspruchs 1.

### Stand der Technik

Zur Erhöhung des Wirkungsgrades bezüglich der Ausnutzung von Energie bei Heizgeräten ist es aus der DE 195 10 612 A1 bekannt, in einer von einem Wärmetauscher umgebenen Brennkammer einen Verdrängungskörper anzuordnen, der die von einem Brenner erzeugten Heizgase an eine Heizfläche des Wärmetauschers leitet. Der Verdrängungskörper ist dabei topfförmig ausgebildet und weist an der äußeren Umfangswand Heizgasleitflächen auf, die sowohl eine Vergrößerung der Oberfläche des Verdrängungskörpers und damit eine wirkungsvollere Strahlungsheizfläche bilden als auch Einfluss auf die Strömungsgeschwindigkeit des Heizgases nehmen, wodurch der Wärmeübergang zur Heizfläche des Wärmetauschers hin verbessert wird.

Ein weiteres Heizgerät mit einem Verdrängungskörper im Heizgasweg ist aus der DE 29 17 759 C2 bekannt. Hierbei weist zusätzlich zu dem im Heizgasweg angeordneten Verdrängungskörper zur Erhöhung des Wärmeübergangs zum Wärmetauscher hin der Wärmetauscher Leitbleche auf, die von der Heizfläche des Wärmetauschers radial nach innen bis hin zum Verdrängungskörper verlaufen. Der Verdrängungskörper ist dabei aus einem Hochtemperatur-Isolationsmaterial ausgeführt und besitzt zur Anströmseite des Heizgases hin einen kegelförmigen Abschnitt.

Die GB 2 094 968 A die die Merkmale des Oberbegriffs von Anspruch 1 zeigt, offenbart einen Gasbrenner mit einem schwarzen Strahlungskörper, der von einer Mehrzahl von Flammentunneln durchbrochen ist. Die in den Flämmentunneln brennenden Flammen heizen den schwarzen Körper auf, der seine Wärme an den gegenüberliegenden Wärmetauscher abstrahlt. Die aus den Flammentunneln austretenden Heizgase übertragen ihre Restwärme durch Konvektion ebenfalls an den Wärmetauscher.

Aufgabe der vorliegenden Erfindung ist es, ein Heizgerät mit einem Verdrängungskörper zu schaffen, bei dem die Wärmeübertragung vom Heizgas auf das Heizwasser verbessert und gleichzeitig die thermische Beanspruchung des Wärmetauschers vergleichmäßigt wird.

### Vorteile der Erfindung

Das erfindungsgemäße Heizgerät mit den kennzeichnenden Merkmalen des Anspruchs 1 hat den Vorteil, dass die Wärmeübertragung vom Heizgas auf das Heizwasser im Wärmeübertrager verbessert und gleichzeitig eine Vergleichmäßigung der thermischen Beanspruchung des Wärmetauschers erreicht wird. Durch die Vergleichmäßigung der thermischen Beanspruchung werden auf Grund sehr hoher Temperaturwechselbeanspruchung bezüglich Dauerbruch gefährdete Bereiche am Wärmetauscher vermieden.

Durch die in den Unteransprüchen aufgeführten Merkmale sind vorteilhafte Ausgestaltungen des Heizgerätes möglich.

Eine gezielte Beaufschlagung von ansonst wenig beanspruchten Bereichen des Wärmetauschers mit heißem Heizgas wird erreicht, indem die Kanäle zu am Verdrängungskörper radial angeordneten Ausströmöffnungen führen. Über die Ausströmöffnungen strömt der jeweilige Teilgasstrom des Heizgases gezielt zu den ausgewählten Bereichen der Heizfläche der Wärmetauschereinheit. Dabei ist im Verdrängungskörper ein Zuführkanal ausgebildet, von dem Abzweigungskanäle abzweigen, die zu den radial angeordneten Ausströmöffnungen führen. Der Zuführkanal ist zweckmäßigerweise zentral im Verdrängungskörper angeordnet. Vorteilhaft ist, wenn die Abzweigungskanäle im Verdrängungskörper in Strömungsrichtung des Heizgasstromes radial geneigt zu den Mündungsöffnungen geführt sind. Vorteilhaft ist weiterhin, wenn der Verdrängungskörper konisch ausgeführt ist, wobei der Durchmesser des Kegels in Strömungsrichtung des Heizgasstromes zunimmt.

### Zeichnung

Zwei Ausführungsbeispiele der Erfindung sind in der Zeichnung dargestellt und in der nachfolgenden Beschreibung erläutert.

Es zeigen:
- Figur 1: eine schematische Schnittdarstellung durch ein Heizgerät mit einem Wärmetauscher für den kondensierenden Betrieb und
- Figur 2: eine schematische Schnittdarstellung durch ein Heizgerät mit einem Wärmetauscher für den nichtkondensierenden Betrieb.

### Ausführungsbeispiele

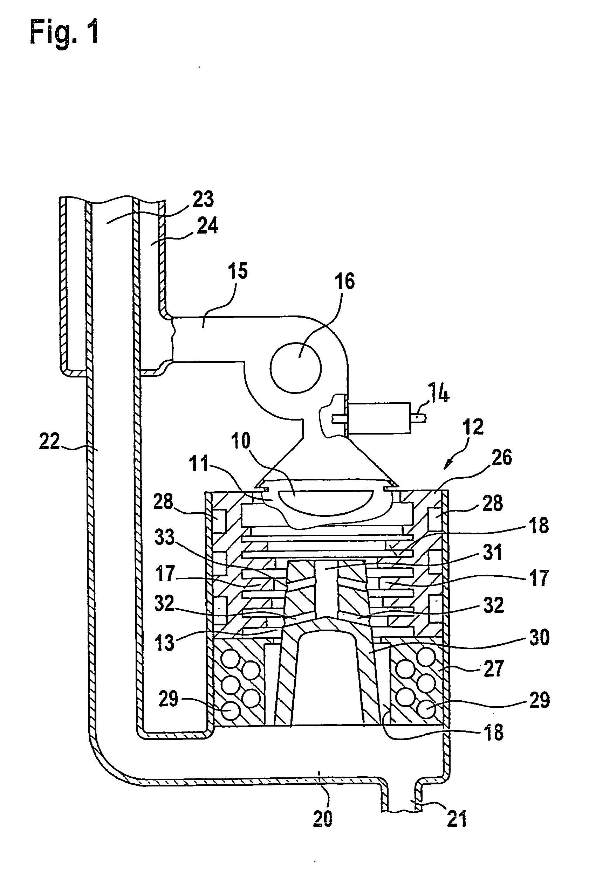

Das in der Figur 1 dargestellte Heizgerätes nutzt die Kondensationswärme des im Verbrennungsgas bzw. im Heizgas enthaltenen Wasserdampfes, indem das Heizgas auf einen unter Taupunkttemperaturen von ca. 55°C liegenden Wert abgekühlt wird. Derartige, für den kondensierenden Betrieb geeignete Heizgeräte werden auch Brennwertgeräte genannt.

Das Heizgerät gemäß Figur 1 weist einen Brenner 10, eine Brennkammer 11 und eine Wärmetauschereinheit 12 mit einer Heizfläche 18 auf. Dem Brenner 10 wird ein Brenngas-/Luftgemisch zugeführt, wobei das Brenngas über eine Brenngasleitung 14 und die Verbrennungsluft über eine Luftzuführung 15 eingeleitet wird. Zur Zuführung der Verbrennungsluft dient ein Gebläse 16, das in die Luftzuführung 15 integriert ist. Der Brenner 10 sitzt am oberen Ende der Brennkammer 11, wobei die Brennkammer 11 seitlich von einem Teil der Wärmetauschereinheit 12 umgeben ist.

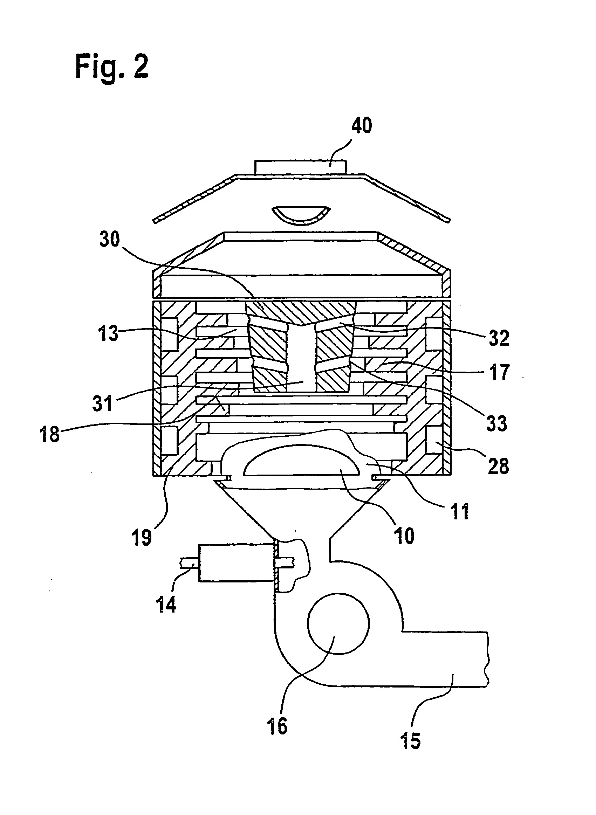

Stromab der Wärmetauschereinheit 12 ist ein Abgassammelraum 20 angeordnet, an dessen tiefster Stelle eine Kondensatabführung 21 liegt. An den Abgasraum 20 schließt sich eine Abgasabführung 22 an, die in ein Abgasrohr 23 mündet. Bei dem dargestellten Ausführungsbeispiel gehört das Abgasrohr 23 zu einem Außenwandanschluss, wobei das Abgasrohr 23 koaxial von einem Luftzuführrohr 24 umgeben ist. Das Luftzuführrohr 24 zweigt zur Luftzuführung 15 ab. Es ist aber genauso möglich, die Abgasabführung 22 gemäß Figur 1 an einen Kaminanschluss gemäß Figur 2 anzuschließen.

Die Wärmetauschereinheit 12 ist zylinderförmig ausgeführt und besitzt beispielsweise einen dem Brenner 10 zugewandten Heißgaswärmetauscherabschnitt 26 und einen den Brenner 10 abgewandten Kondensationswärmetauscherabschnitt 27. Dadurch ist ein modularer Aufbau der Wärmetauschereinheit 12 möglich, wobei der Heißgaswärmetauscherabschnitt 26 auch einzeln bei einem sogenannten konventionellen Heizgerät ohne Abnutzung der Kondensationswärme des Heizgases eingesetzt werden kann. Der Heißgaswärmetauscherabschnitt 26 besitzt am Außenumfang spiralförmig verlaufende Wasserhanäle 28 für das zu erwärmende Heizwasser. Beim Kondensationswärmetauscherabschnitt 27 sind weitere Heizwasserkanäle 29 vorhanden, die hierbei jedoch in den Körper des Kondensationswärmetauscherabschnitts 27 integriert sind. Es ist aber genauso denkbar, die weiteren Heizwasserkanäle 29 spiralförmig am Kondensationswärmetauscherabschnitt 27 anzuordnen oder als ein oder mehrlagige Rohrwendel auszuführen.

Innerhalb der Wärmetauschereinheit 12 ist anschließend an die Brennkammer 11 beispielsweise eine im Wesentlichen zylinderförmig verlaufende Heizkammer 13 ausgebildet, in der sich ein Verdrängungskörper 30 befindet. Das vom Brenner 10 erzeugte Heizgas wird dabei entgegen der Auftriebsrichtung durch die Heizkammer 13 geleitet. Die Heizkammer 13 wird radial von der Heizfläche 18 der Wärmetauschereinheit 12 begrenzt. Der Verdrängungskörper 30 erstreckt sich beispielsweise in Strömungsrichtung des Heizgases vom strömungsseitigen Eingang des Heißgaswärmetauscherabschnitts 26 bis zum strömungsseitigen Ausgang des Kondensationswärmetauscherabschnitts 27.

Die zur Heizkammer 13 weisende Heizfläche 18 des Heißgaswärmetauscherabschnitts 26 ist zur Vergrößerung der Oberfläche mit Rippen 17 ausgeführt. Die Heizfläche 18 des Kondensationswärmetauscherabschnitt 27 besitzt gemäß dem vorliegenden Ausführungsbeispiel eine glatte Oberfläche. Es ist aber genauso möglich, auch diesen Abschnitt der Wärmetauschereinheit 12 mit Rippen oder einer anderen, den Wärmeübergang verbessernde Oberflächenstruktur auszuführen.

Der Verdrängungskörper 30 ist beispielsweise konisch ausgeführt, wobei der Durchmesser des Kegels in Strömungsrichtung des Heizgasstromes zunimmt. Der Verdrängungskörper 30 besitzt einen zentralen Zuführkanal 31, von dem radial geneigt verlaufende Ausströmkanäle 32 abzweigen. Die Ausströmkanäle 32 münden mit Ausströmöffnungen 33 radial verteilt in der Mantelfläche des Verdrängungskörpers 30, so dass Teilströme des Heizgases auf ausgewählte Bereiche der Heizfläche 18 der Wärmetauschereinheit 12 bzw. des Heißgaswärmetauscherabschnitts 26 gelenkt werden.

Dadurch werden weniger beanspruchte Bereiche der Heizfläche 18 der Wärmetauschereinheit 12 bzw. des Heißgaswärmetauscherabschnitts 26 stärker mit Heizgas beaufschlagt und umgekehrt hoch beanspruchte Bereiche der Wärmetauschereinheit 12 entlastet. Im vorliegenden Ausführungsbeispiel beschränken sich die Ausströmöffnungen 33 der Aussiremkanäle 32 auf den Heißgaswärmetauscherabschnitt 26.

Im Bereich des Kondensationswärmetauscherabschnitts 27 wird das an der Oberfläche vorbeiströmende Heizgas durch den konisch ansteigenden Verlauf des Verdrängungskörpers 30 in Richtung der Heizfläche 18 des Kondensationswärmetauscherabschnitts 27 geführt. Es ist aber auch eine Ausführungsform denkbar, bei der sowohl im Heißgaswärmetauscherabschnitt 26 als auch im Kondensationswärmetauscherabschnitt 27 Ausströmkanäle 32 vorliegen, die das Heizgas gezielt ausgewählten Abschnitten der Heizfläche 18 dieser Abschnitte zuleiten.

Auf Grund des modularen Aufbaus der Wärmetauschereinheit 12 ist der Heißgaswärmetauscherabschnitt 26 gemäß Figur 1 beispielsweise auch als Wärmetauschereinheit 19 für ein Heizgerät gemäß Figur 2 einsetzbar. Hierbei ist die sich in Strömungsrichtung des Heizgases erstreckende Ausdehnung des Heißgaswärmetauscherabschnitts 26 als Wärmetauschereinheit 19 ausreichend. Heizgeräte gemäß Figur 2 sind beispielsweise solche, die nicht die Kondensationswärme des im Heizgas enthaltenen Wasserdampfes ausnutzen. Das Heizgerät gemäß Figur 2 ist dabei an einen Kaminanschluss 40 angeschlossen, wobei die Verbrennungsluft aus dem Aufstellungsraum des Heizgerätes über die Luftzuführung 15 und über das Gebläse 16 dem Brenner 10 zugeführt wird. Es ist aber auch möglich, das Heizgerät gemäß Figur 2 an einen Außenwandanschluss gemäß Figur 1 anzuschießen.

Bei dem in Figur 2 dargestellten Heizgerät strömt das Heizgas in der Heizkammer 13 in Auftriebsrichtung. Auch bei dem Heizgerät gemäß Figur 2 weist der in der Heizkammer 13 sich befindende Verdrängungskörper 30 einen zentralen Zuführkanal 31 mit davon radial geneigt abzweigenden Ausströmkanälen 32 auf, so dass das Heizgas über die Ausströmöffnungen 33 gezielt ausgewählten Bereichen der Heizfläche 18 des Wärmetauschereinheit 19 zugeleitet werden kann.

Die Erfindung ist für jeden Wärmetauscher mit Verdrängungskörper anwendbar und nicht auf eine modular aufgebaute Wärmetauschereinheit beschränkt.

## Patentansprüche

1. Heizgerät mit einem Brenner (10), einer Brennkammer (11), einer Wärmetauschereinheit (12) sowie mit einem im Heizgasstrom angeordneten Verdrängungskörper (30), der die Strömung des Heizgases zu einer Heizfläche der Wärmetauschereinheit (12) lenkt, **dadurch gekennzeichnet, dass** sich der Verdrängungskörper (30) in einer an die Brennkammer (11) anschließenden Heizkammer (13) befindet, wobei der Verdrängungskörper (30) Kanäle (31, 32) aufweist, über die zumindest ein Teil des Heizgasstromes gezielt ausgewählten Bereichen der Heizfläche (18) der Wärmetauschereinheit (12) zuführbar ist.

2. Heizgerät nach Anspruch 1, **dadurch gekennzeichnet, dass** die Kanäle (31, 32) zu am Verdrängungskörper (30) radial angeordneten Ausströmöffnungen (33) führen.

3. Heizgerät nach Anspruch 2, **dadurch gekennzeichnet, dass** im Verdrängungskörper (30) ein Zuführkanal (31) ausgebildet ist, von dem Ausströmkanäle (32) abzweigen, die zu den radial angeordneten Ausströmöffnungen (33) fuhren.

4. Heizgerät nach Anspruch 3, **dadurch gekennzeichnet, dass** der Zuführkanal (31) im Wesentlichen zentral im Verdrängungskörper (30) angeordnet ist.

5. Heizgerät nach Anspruch 3, **dadurch gekennzeichnet, dass** die Ausströmkanäle (32) im Verdrängungskörper (30) in Strömungsrichtung des Heizgasstromes radial geneigt zu den Ausströmöffnungen (33) geführt sind.

6. Heizgerät nach einem der vorhergehenden Ansprüche, **dadurch gekennzeichnet, dass** der Verdrängungskörper (30) konisch ausgeführt ist, wobei der Durchmesser des Kegels in Strömungsrichtung des Heizgasstroms zunimmt.

7. Heizgerät nach einem der vorhergehenden Ansprüche, **dadurch gekennzeichnet**, das die Wärmetauschereinheit (12) modular aufgebaut ist und einen Heißgaswärmetauscherabschnitt (26) und einen Kondensationswärmetauscherabschnitt (27) aufweist.

## Claims

1. A heater comprising a burner (10), a combustion chamber (11), a heat exchanger unit (12) and comprising a displacement body (30) arranged in the heating gas stream, which displacement body guides the flow of the heating gas to a heating surface of the heat exchanger unit (12), **characterised in that** the displacement body (30) is located in a heating chamber (13) adjoining the combustion chamber (11), wherein the displacement body (30) has channels (31, 32) by which means at least some of the heating gas stream can be supplied to specifically selected regions of the heating surface (18) of the heat exchanger unit (12).

2. The heater according to claim 1, **characterised in that** the channels (31, 32) lead to outflow openings (33) arranged radially on the displacement body (30).

3. The heater according to claim 2, **characterised in that** a feed channel (31) is formed in the displacement body (30), from which outflow channels (32) branch off, which lead to the radially arranged outflow openings (33).

4. The heater according to claim 3, **characterised in that** the feed channel (31) is arranged substantially centrally in the displacement body (30).

5. The heater according to claim 3, **characterised in that** the outflow channels (32) in the displacement body (30) are guided radially at an inclination to the outflow openings (33) in the direction of flow of the heating gas stream.

6. The heater according to any one of the preceding claims, **characterised in that** the displacement body (30) is designed to be conical, wherein the diameter of the cone increases in the direction of flow of the heating gas stream.

7. The heater according to any one of the preceding claims, **characterised in that** the heat exchanger unit (12) has a modular structure and comprises a hot gas heat exchanger section (26) and a condensation heat exchanger section (27).

## Revendications

1. Appareil de chauffage comprenant un brûleur (10), une chambre de combustion (11), une unité échangeur de chaleur (12) et un corps de refoulement (30) disposé dans le flux de gaz de chauffage, qui dirige l'écoulement du gaz de chauffage vers une surface de chauffage de l'unité échangeur de chaleur (12), **caractérisé en ce que** le corps de refoulement (30) se trouve dans une chambre de chauffage (13) faisant suite à la chambre de combustion (11), le corps de refoulement (30) présentant des canaux (31, 32), par lesquels au moins une partie du flux de gaz de chauffage peut être amenée à des zones, sélectionnées de façon ciblée, de la surface de chauffage (18) de l'unité échangeur de chaleur (12).

2. Appareil de chauffage selon la revendication 1, **caractérisé en ce que** les conduits (31, 32) aboutissent à des ouvertures de sortie (33) disposées radialement sur le corps de refoulement (30).

3. Appareil de chauffage selon la revendication 2, **caractérisé en ce qu'**un canal d'arrivée (31) est formé dans le corps de refoulement (30), canal duquel dévient des canaux de sortie (32), qui aboutissent aux ouvertures de sortie (33) disposées radialement.

4. Appareil de chauffage selon la revendication 3, **caractérisé en ce que** le canal d'arrivée (31) est disposé principalement de façon centrale dans le corps de refoulement (30).

5. Appareil de chauffage selon la revendication 3, **caractérisé en ce que** les conduits de sortie (32) sont guidés dans le corps de refoulement (30) dans le sens d'écoulement du flux de gaz de chauffage radialement de façon inclinée vers les orifices de sortie (33).

6. Appareil de chauffage selon l'une quelconque des revendications précédentes, **caractérisé en ce que** le corps de refoulement (30) est conçu conique, le diamètre du cône augmentant dans le sens d'écoulement du gaz de flux de chauffage.

7. Appareil de chauffage selon l'une quelconque des revendications précédentes, **caractérisé en ce que** l'unité échangeur de chaleur (12) est conçue de façon modulaire et présente une partie échangeur de chaleur de gaz de chauffage (26) et une partie échangeur de chaleur de condensation (27).
